# EUROPEAN PATENT SPECIFICATION

(11) **EP 3 763 516 B1**
(45) Date of publication and mention of the grant of the patent: **18.02.2026**
(21) Application number: 18909199.4
(22) Date of filing: 30.11.2018
(51) Int. Cl.: B29C 70/44, B32B 3/12, B29L 9/00, B29C 70/34, B29C 70/68, B29C 70/86

(54) **METHOD FOR FORMING HONEYCOMB SANDWICH COMPOSITE MATERIAL AND JIG USED THEREFOR**
VERFAHREN ZUR HERSTELLUNG EINES WABENFÖRMIGEN SANDWICH-VERBUNDWERKSTOFFES UND VORRICHTUNG HIERFÜR
PROCÉDÉ DE FORMATION DE MATÉRIAU COMPOSITE EN SANDWICH EN NID D'ABEILLES ET GABARIT UTILISÉ À CET EFFET

(30) Priority: 05.03.2018 JP 2018039130
(43) Date of publication of application: 13.01.2021
(73) Proprietor: Nippi Corporation, Yokohama-shi, Kanagawa 236-8540 (JP)
(72) Inventor: AWANO Keita, Yokohama-shi, Kanagawa 236-8540 (JP); TAKATSU Takehito, Yokohama-shi, Kanagawa 236-8540 (JP); JINISHI Toru, Yokohama-shi, Kanagawa 236-8540 (JP)
(74) Representative: Vossius & Partner Patentanwälte Rechtsanwälte mbB
(86) International application number: PCT/JP2018/044261
(87) International publication number: WO 2019/171683

(56) References cited:
- WO-A1-2010/140205
- WO-A1-2015/008536
- JP-A- 2008 247 003
- JP-A- H04 329 125
- JP-A- H08 290 479
- JP-A- H10 278 185
- US-A1- 2012 052 247
- US-A1- 2014 299 257

## Description

### [TECHNICAL FIELD]

The present invention relates to a technique for forming a honeycomb sandwich composite material coated by fiber-reinforced plastic (FRP). More specifically, the present invention relates to a forming technique using a featured jig.

### [BACKGROUND ART]

There is a honeycomb sandwich composite material serving as a material used for aircrafts, automobiles, and the like, which requires the lightness and the strength. In the honeycomb sandwich composite material, both of an upper surface and a lower surface of the core of the honeycomb structure are coated with FRP (see JP 2013-001006A).

US 2012/0052247 A1 discloses a unitized composite structure comprising a composite member having at least one integrally formed composite stiffener. At least one end of the stiffener includes a runout forming a substantially smooth transition between the stiffener and the composite structure.

US 2014/299257 A1 provides a method of making a composite hat stiffener. The method has the steps of curing a composite hat stiffener in a hat tool to form a pre-cured composite hat stiffener. The pre-cured composite hat stiffener has a composite hat section, a plurality of composite stiffening plies with a body ply, a wrap ply, and a base ply, all coupled to the composite hat section, wherein the body ply is coupled to a first side of the composite hat section, the wrap ply is coupled to the body ply, and the base ply is coupled to the body ply and the wrap ply, a pair of radius filler noodles coupled to the composite hat section and disposed between the plurality of composite stiffening plies, and an outer ply coupled to the composite hat section. The method further includes bonding the pre-cured composite hat stiffener to a structure surface.

JP H04 329125 A discloses a case in which a reinforced first outer plate comprising a hat-type stringer and a second outer plate is integrally molded. This is done by laminating a prepreg material on the surface of a molding jig having a recessed portion in the same shape as the outer shape of the first molding element. Then, a foam is filled in a space between the first and the second molding element and autoclave heating and pressurizing molding is performed.

A general method for forming a honeycomb sandwich composite material will be briefly described below. A second prepreg lamination body serving as a lower covering surface is placed on an almost horizontally jig in such a manner that the second prepreg lamination body is laid along the shape of the jig. Then, a honeycomb core is disposed on the second prepreg lamination body, and further a first prepreg lamination body serving as an upper covering surface is placed thereover in such a manner that the first prepreg lamination body tightly fits the shape of the honeycomb core to thereby coat the honeycomb core. At the time, shaping may be performed by using a hot drape apparatus.

Here, the prepreg lamination body is made of a plurality of prepreg sheets which are laminated together. The prepreg sheet is made in such a manner that a reinforcing material such as a carbon fiber is impregnated with uncured thermosetting resin and is formed into a sheet shape.

Further, the shaped honeycomb sandwich composite material is subjected to bagging together with the jig and is conveyed to an autoclave apparatus where heat and pressure are applied. This cures the resin. As a result, a honeycomb sandwich composite material is formed.

### [SUMMARRY OF INVENTION]

### [TECHNICAL PROBLEM]

In a general method for forming a honeycomb sandwich composite material, even in a case where a hot drape apparatus was used for a shaping process and an autoclave apparatus was used for a curing process, a manual operation was still needed as required. Therefore, the method required labor, cost, and time, and there was a large variation in dimensional accuracy depending on an operator as well.

Specifically, in the shaping process, when a prepreg lamination body is brought into tightly fitting to the shape of a honeycomb core, wrinkles and floating-up tend to occur. Further, in the curing process, honeycomb core side surfaces tend to be damaged.

To solve the above described technical problems, measures for preventing occurrence of such inconveniences are needed. JP 2013-001006A proposes some measures.

By the way, JP 2014-125285A proposes FRP forming system including a lamination apparatus by which prepreg sheets are automatically laminated to form a laminated body.

Even in a case where only the lamination apparatus is automated, if much labor is required for the shaping process and the curing process, the entire system will not work as much as expected. Simplification of the shaping process and the curing process is demanded.

The invention of the present application is made to solve the above described technical problems. The purpose of the present invention is to provide a simplified technique for forming a honeycomb sandwich composite material.

### [SOLUTION TO PROBLEM]

The present invention for solving the above described technical problems is directed to a method according to claim 1.

With the above described process, shaping of the honeycomb sandwich composite material can be simplified. Further, automatization of the shaping process can be realized.

The present invention for solving the above described technical problems may further comprise a curing process which will be performed after the shaping process. The curing process includes a step of conveying an uncured honeycomb sandwich composite material before demolded to an autoclave apparatus together with the jig, a step of causing the autoclave apparatus to apply high temperature and high pressure for curing, and, after the curing, a step of causing the honeycomb sandwich composite material to be demolded from the jig and to be turned upside down.

With the above described process, the honeycomb sandwich composite material can be cured in a simple manner. Further, automatization of the curing process can be realized.

Further, at the time when delivered from the shaping process to the curing process, the honeycomb sandwich composite material is not demolded. Therefore, the uncured honeycomb sandwich composite material does not become deformed.

An example going beyond the scope of the appended claims is directed to a curing process in a method for forming a honeycomb sandwich composite material, the honeycomb sandwich composite material including a honeycomb core, a fiber-reinforced plastic-made lower part provided on a honeycomb core lower surface, and a fiber-reinforced plastic-made upper part provided on a honeycomb core upper surface. The curing process includes a step of disposing a jig formed with a concave having a shape conforming to the shape of the honeycomb core when it is turned upside down, a step of disposing in the concave the honeycomb sandwich composite material in a state of being shaped and being turned upside down, a step of conveying the uncured honeycomb sandwich composite material to an autoclave apparatus together with the jig, a step of causing the autoclave apparatus to apply high temperature and high pressure for curing, and, after the curing, a step of causing the honeycomb sandwich composite material to be demolded from the jig and to be turned upside down.

With the above described process, the honeycomb sandwich composite material can be cured in a simple manner. Further, automatization of the curing process can be realized.

In the present invention, preferably, a caul plate is disposed, in the curing process performed by the autoclave apparatus, in such a manner that the caul plate corresponds to the lower face of the fiber-reinforced plastic-made lower part.

With the above described structure, an inner surface accuracy improves while an outer surface accuracy is secured as well.

An example going beyond the scope of the appended claims is directed to a jig formed with a concave to be used in the shaping process.

The present invention for solving the above described problems is directed to a jig formed with a concave to be used in the curing process.

In the present invention, preferably, the concave has an internal dimension not greater than the sum of the external dimension of the honeycomb core and the thickness of the first prepreg sheet.

With the above described structure, lack of pressure during the curing process can be compensated, and occurrence of gaps can be suppressed.

### [ADVANTAGEOUS EFFECT OF INVENTION]

The technique for forming the honeycomb sandwich composite material of the present invention is simple. As a result, a manual operation by an operator can be omitted, and automatization thereof can be realized.

### [BRIEF DESCRIPTION OF DRAWINGS]

FIG. 1 schematically illustrates the entire system.
FIG. 2 is a flow illustrating a shaping process.
FIG. 3 is a flow illustrating a subsequent shaping process.
FIG. 4 is a flow illustrating a further subsequent shaping process.
FIG. 5 illustrates examples of a heating/decompressing profile.
FIG. 6 is a flow illustrating a curing process.
FIG. 7 is a flow illustrating a subsequent curing process.
FIG. 8 is a flow partially picked up from the operation process.
FIG. 9 illustrates an effect (compared with Conventional Example).
FIG. 10 illustrates another effect (compared with Conventional Example).
FIG. 11 illustrates an effect (compared with Comparative Example).
FIG. 12 illustrates another effect (compared with Conventional Example).
FIG. 13 illustrates a further another effect (compared with Conventional Example).
FIG. 14 is a Modification Example.
FIG. 15 is another Modification Example.

### [Description of Embodiments]

### ~Structure of Entire System~

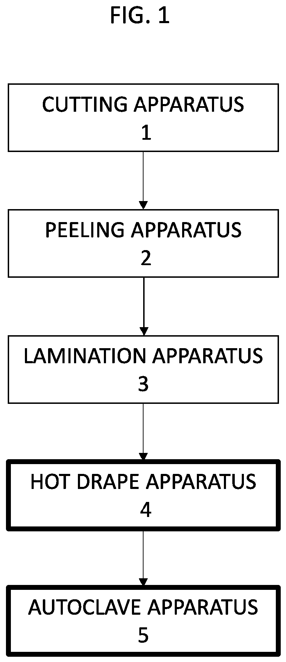

FIG. 1 schematically illustrates the entire system related to FRP forming. The entire system includes a cutting apparatus 1, a peeling apparatus 2, a lamination apparatus 3, a hot drape apparatus 4, and an autoclave apparatus 5.

A prepreg sheet is formed in such a manner that a reinforcing material such as a carbon fiber is impregnated with uncured resin and is formed into a sheet shape. The cutting apparatus 1 cuts the prepreg sheet into desired dimension and shape.

The uncured prepreg sheet has viscosity. Therefore, the prepreg sheet is provided with protective sheets attached to the both surfaces thereof. The peeling apparatus 2 peels the protective sheets off from the prepreg sheet after cutting.

The prepreg sheets from which the protective sheets are peeled are delivered one by one to the lamination apparatus 3. The automatic lamination apparatus 3 laminates the prepreg sheets one by one on a placing table to form a laminated body.

The laminated body is delivered to the hot drape apparatus 4. The hot drape apparatus 4 shapes the laminated body into a shape conforming to the shape of a mold. The present invention is directed to a shaping process, which will be described below in detail.

The laminated body after shaping is subjected to bagging together with the mold and is delivered to the autoclave apparatus 5. The autoclave apparatus 5 applies heat and pressure to the laminated body after bagging. Accordingly, cured FRP parts can be manufactured. The present invention is directed to an curing process, which will be described below in detail.

Automatization of the cutting apparatus 1, the peeling apparatus 2, the lamination apparatus 3, the hot drape apparatus 4, and the autoclave apparatus 5 can realize automatization of the entire system.

### ~Structure~

A honeycomb sandwich composite 30 includes a honeycomb core 20, a fiber-reinforced plastic-made lower part provided on a honeycomb core lower surface, and a fiber-reinforced plastic-made upper part provided on a honeycomb core upper surface. Here, a first prepreg sheet-laminated body 21 serves as the fiber-reinforced plastic-made upper part. A second prepreg sheet-laminated body 22 serves as the fiber-reinforced plastic-made lower part.

The honeycomb core 20 has a good advantage against a force applied from a vertical direction but has a poor advantage against a force applied from a horizontal direction. Therefore, generally, side surfaces of the honeycomb core are sloped so as not to directly receive a force from a horizontal direction. For the convenience of explanation, a side of short-side is referred to as an upper side and a side of long-side is referred to as a lower side.

A jig 10 used in the shaping process or/and the curing process is formed with a concave 11 having a shape conforming to the shape of the honeycomb core when it is turned upside down. In other words, the concave 11 has a shape being wider on its upper side and being narrower on its lower side.

### ~Shaping Process~

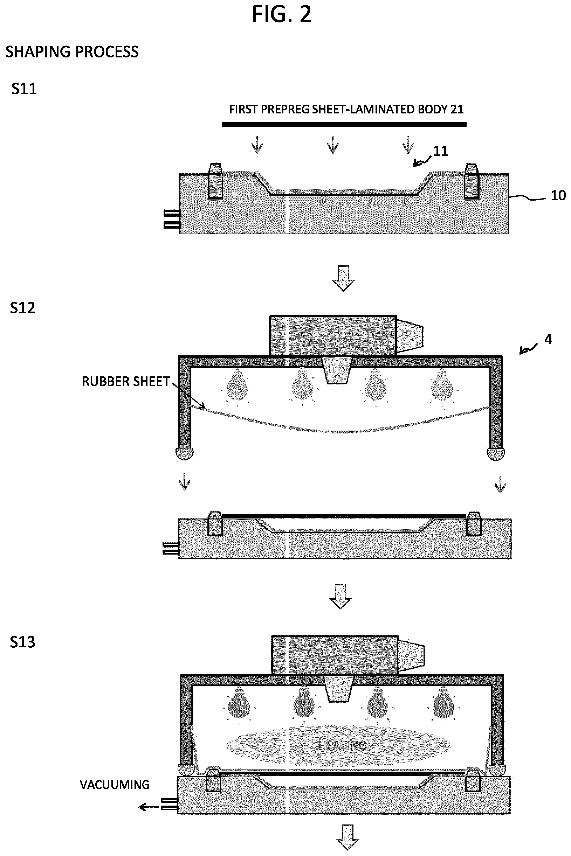

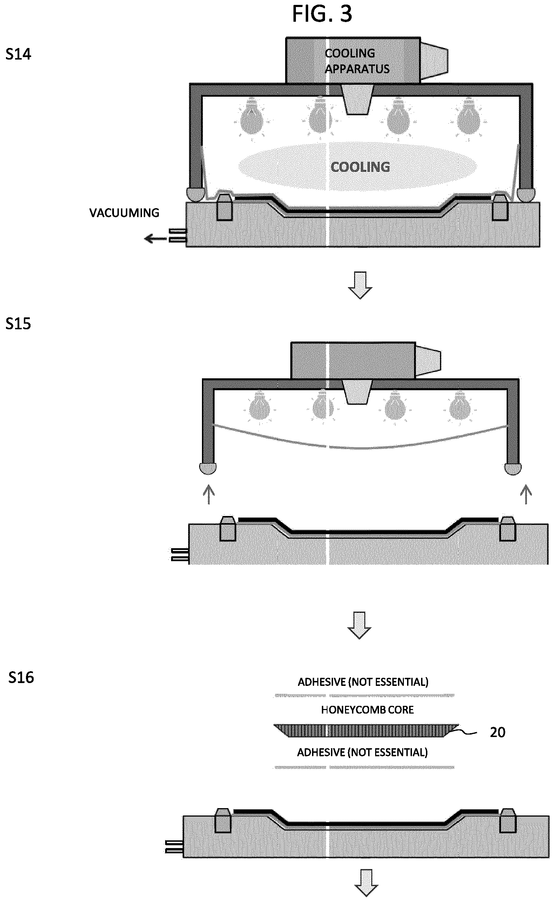

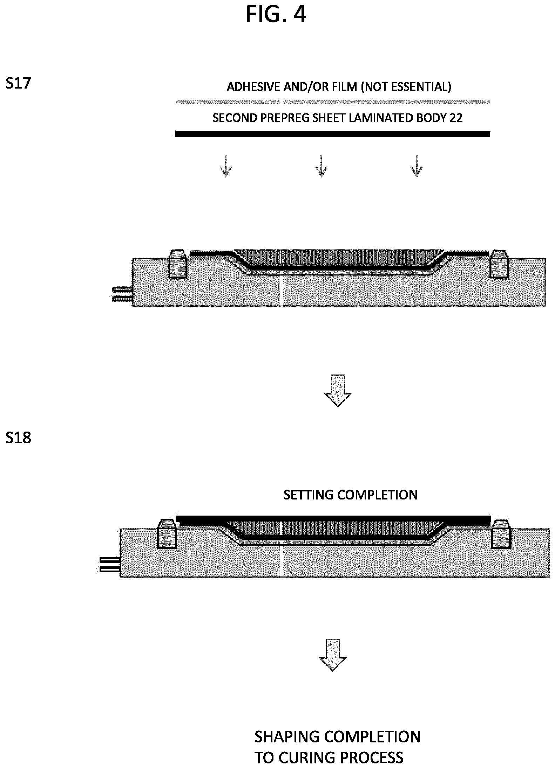

In the technique for forming the honeycomb sandwich composite 30, a shaping process will be described below. FIG. 2 to FIG. 4 illustrate a series of operation flows of the shaping process.

Initially, the jig 10 is placed. At the time, a film taking the role of coating may be disposed over the concave 11 in a tightly contacting manner. Then, the first prepreg sheet-laminated body 21 having an almost horizontally extending shape is further placed over to cover the concave 11 of the jig (S11).

The hot drape apparatus 4 is placed on the jig 11 on which the first prepreg sheet-laminated body 21 is placed (S12). The hot drape apparatus 4 can be any of the generally used same kind of apparatus. The hot drape apparatus 4 forms a sealed space. The hot drape apparatus 4 includes a rubber sheet.

The hot drape apparatus 4 applies heat while vacuuming. The space formed by the rubber sheet and the first prepreg sheet-laminated body 21 gradually shrinks to cause the rubber sheet to tightly contact with the first prepreg sheet-laminated body 21 (S13).

Vacuuming and heating by the hot drape apparatus 4 are further continued. The space formed by the first prepreg sheet-laminated body 21 and the concave 11 of the jig gradually shrinks to be deformed, thereby allowing the first prepreg sheet-laminated body 21 to tightly contact with the concave 11 of the jig. The rubber sheet follows the deformation of the first prepreg sheet-laminated body 21. While the vacuuming is performed continuously, the heating is taken over by cooling (S14). The first prepreg sheet-laminated body 21 is shaped into a shape conforming to the shape of the concave 11.

After the cooling, vacuuming is stopped to release air. Then, the hot drape apparatus 4 is removed (S15).

The concave of the first prepreg sheet-laminated body 21 receives the honeycomb core 20 in a state of being turned upside down (S16). The outer edge of the first prepreg sheet-laminated body 21 encloses the honeycomb core 20 in planar view.

Here, the honeycomb core 20 may be provided with adhesive on its upper surface and lower surface. Further, if the adhesive to be applied on the side of the first prepreg sheet-laminated body is provided before shaping the first prepreg sheet-laminated body into the shape conforming to the shape of the concave (e.g., S11), the process will be simplified.

The outer edge of the first prepreg sheet-laminated body 21 and the lower surface of the honeycomb core 20 (in a state of being turned upside down) receives over themselves the second prepreg sheet-laminated body 22 having an almost horizontally extending shape (S17). A film may be further placed thereover.

Now, the shaping process is completed (S18).

Further, it is preferable that the process advances continuously from the shaping process to the curing process (will be described below in detail).

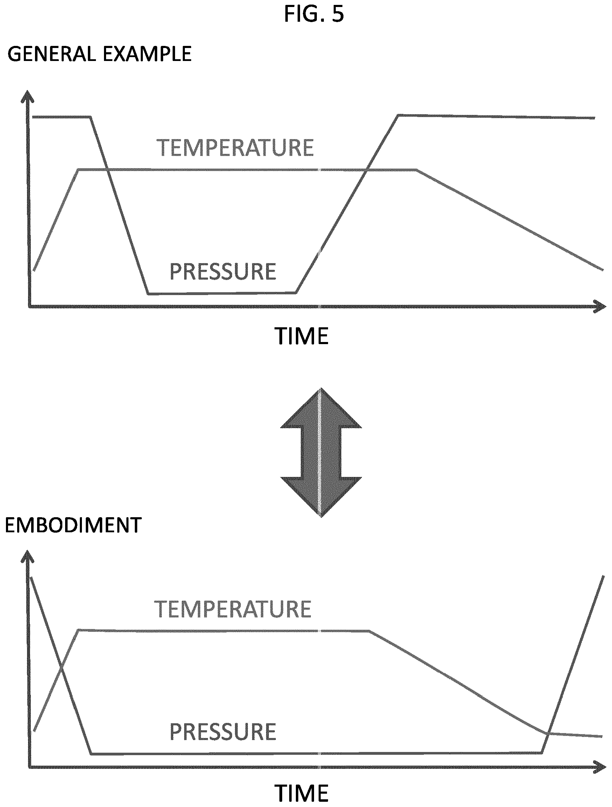

FIG. 5 is examples of a heating/decompressing profile of the hot drape apparatus 4. In many of the general examples, after starting heating, vacuuming is started and, after stopping the vacuuming, cooling is started.

On the other hand, in Embodiment, heating is performed while vacuuming (S13), the vacuuming and the heating are continued, and, while the vacuuming is continued, the heating is taken over by cooling (S14). After the cooling, the vacuuming is stopped (S15).

### ~Curing Process~

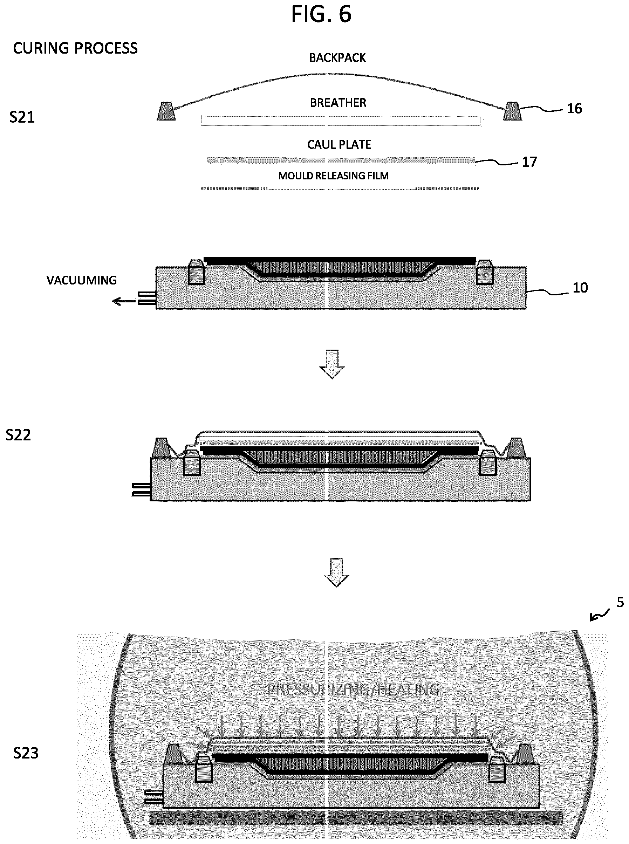

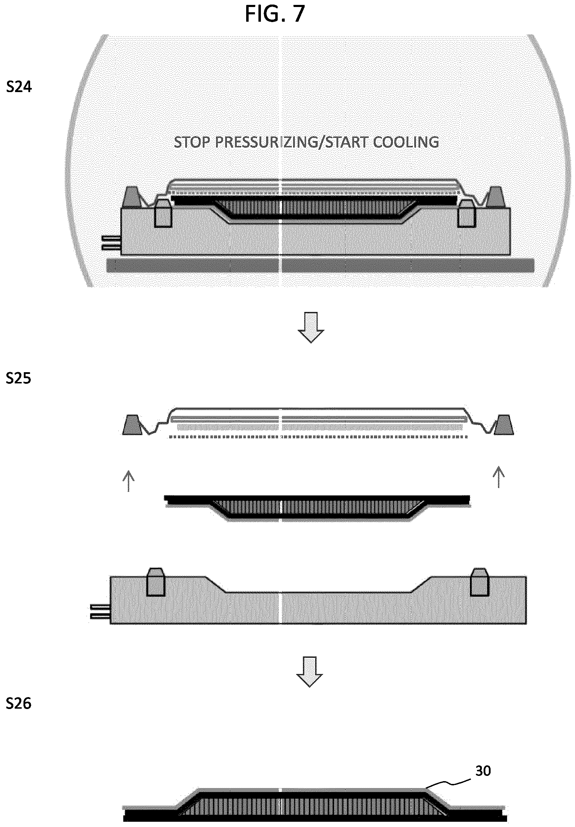

In the technique for forming the honeycomb sandwich composite 30, a curing process will be described below. It is preferable that the curing process continuously takes over from the shaping process. In further aspects of the disclosure, the shaping may be performed by a process other than the above described shaping process. FIG. 6 and FIG. 7 illustrate a series of operation flows of the shaping process.

When the process takes over from the shaping process, the uncured honeycomb sandwich composite 30 should not be demolded from the jig. The honeycomb sandwich composite 30 in a state of being turned upside down is already disposed in the concave 11 of the jig 10. In a case where the honeycomb sandwich composite 30 is shaped by a process other than the above described shaping process, the honeycomb sandwich composite 30 in a state of being turned upside down is disposed in the concave 11 of the jig 10.

Further, the backpack 16 is provided thereover for vacuuming and sealing (S21). Between the honeycomb sandwich composite 30 and the backpack 16, a release film, the caul plate 17, and/or a breather may be inserted. Such series of operations is referred to as bagging.

The honeycomb sandwich composite 30 after bagging is conveyed to the autoclave apparatus 5 together with the jig (S22).

The autoclave apparatus 5 applies high temperature and high pressure to cure resin (S23). Then, the autoclave apparatus 5 stops applying pressure and starts cooling (S24).

After the curing, the honeycomb sandwich composite 30 is conveyed out from the autoclave apparatus 5 and is demolded from the jig 10 (S25).

Further, the honeycomb sandwich composite 30 is turned upside down (S26). Now, the curing process is completed. The honeycomb sandwich composite 30 is formed.

### ~Pick-up from Processes~

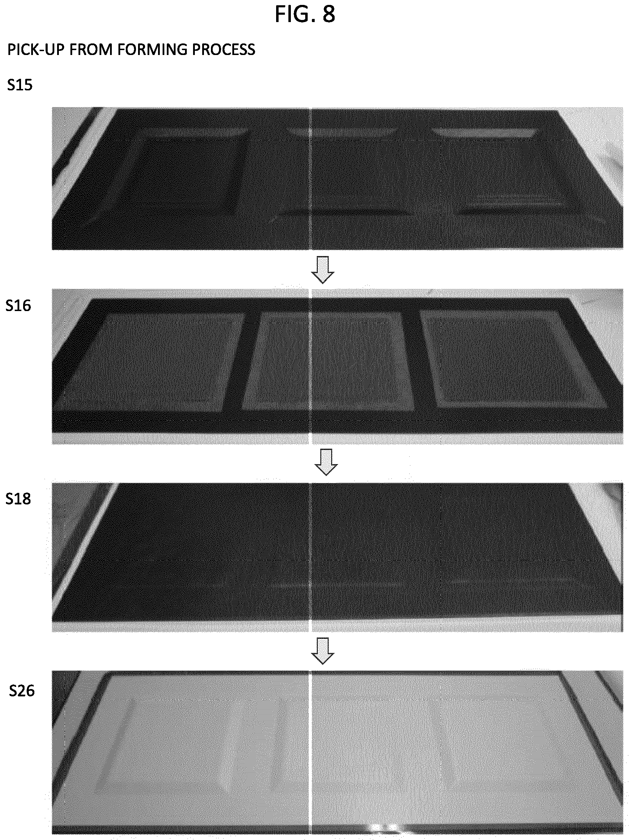

FIG. 8 is a flow illustrating main parts picked up from the series of operation processes of the shaping process and the curing process. Progress of each process is illustrated by a perspective view. Each perspective view includes a plurality of concaves.

S15 illustrates a state where the hot drape apparatus 4 shapes the first prepreg sheet-laminated body 21 into a shape in conformity with the shape of the concave.

S16 illustrates a state where a honeycomb core 20 in a state of being turned upside down is disposed into each concave of the first prepreg sheet-laminated body 21. The honeycomb core lower surface (in a state of being turned upside down) is provided with adhesive.

S18 illustrates a state where the second prepreg sheet-laminated body 22 is placed thereover. Now, the shaping process is completed, and the process advances continuously to the curing process.

S26 illustrates a state where the autoclave apparatus 5 completes the curing process and the honeycomb sandwich composite 30 is turned upside down.

### ~Study of Effect~

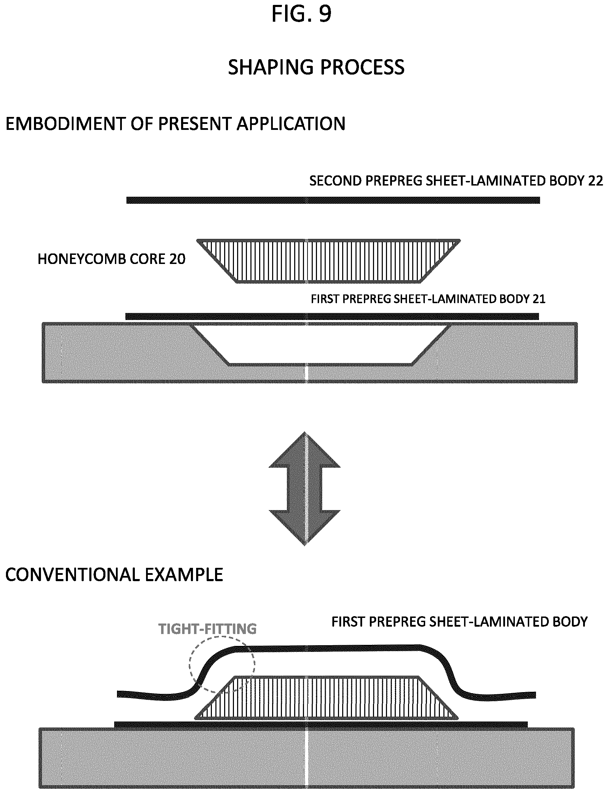

An effect of the present Embodiment will be studied compared with Conventional Examples and Comparative Examples. The comparison will be performed referring to FIG. 9 to FIG. 13.

FIG. 9 illustrates an effect produced by the shaping process according to the present Embodiment.

In Conventional Example, when the first prepreg sheet-laminated body was placed over the honeycomb core, it was essential that the first prepreg sheet-laminated body having an almost horizontally extending shape was brought into tightly fitting to the shape of the honeycomb core. This operation was performed manually by a skillful operator. As a result, it was difficult to automatize the operation.

To the contrary, in the shaping process of the present Embodiment, the first prepreg sheet-laminated body 21 having an almost horizontally extending shape is placed in such a manner that the first prepreg sheet-laminated body 21 covers the concave 11 of the jig 10 (S11). This operation can be performed relatively with ease (A manually fitting operation is not essential.), a loading apparatus used in a pick and place method can realize the automatization of the operation.

Now, shaping of the first prepreg sheet-laminated body 21 is performed by the hot drape apparatus 4 (S14). In other words, the series of the processes can be automatized.

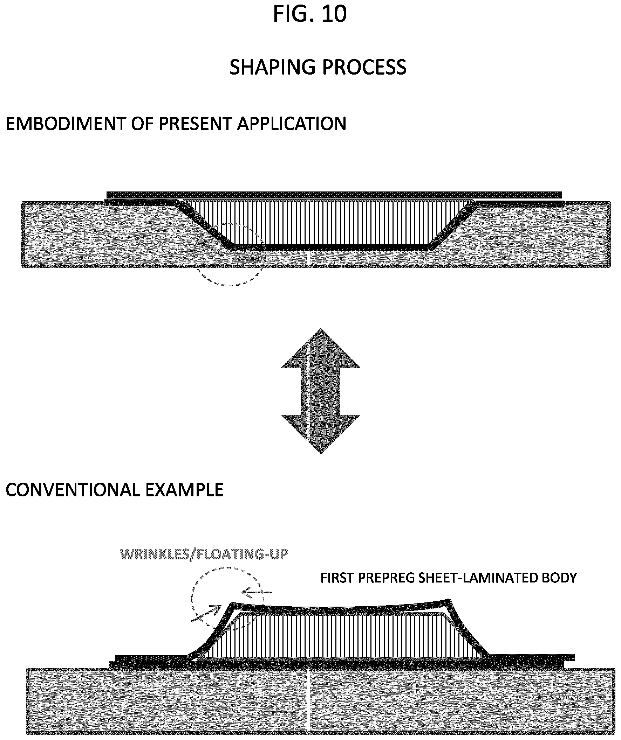

FIG. 10 illustrates another effect produced by the shaping process according to the present Embodiment.

In Conventional Example, when the first prepreg sheet-laminated body having an almost horizontally extending shape was brought into tightly fitting to the shape of the honeycomb core, there was a possible problem as follows. Namely, the first prepreg sheet-laminated body got together around honeycomb core shoulder parts, which invited lack of shrinkage to cause occurrence of wrinkles and floating-up. The product quality varied depending on the skill level of the operator.

To the contrary, in the shaping process of the present Embodiment, shaping of the first prepreg sheet-laminated body 21 is performed by the hot drape apparatus 4 (S14). At the time, because the first prepreg sheet-laminated body 21 is stretched around the honeycomb core shoulder parts, the wrinkles and the floating-up hardly occur. This enables securing of high quality. Further, the automatization makes it possible to secure the high quality without variation of quality.

Further, in the hot drape apparatus 4, because the heating is performed while the vacuuming is preliminary performed, occurrence of wrinkles and floating-up can be further suppressed.

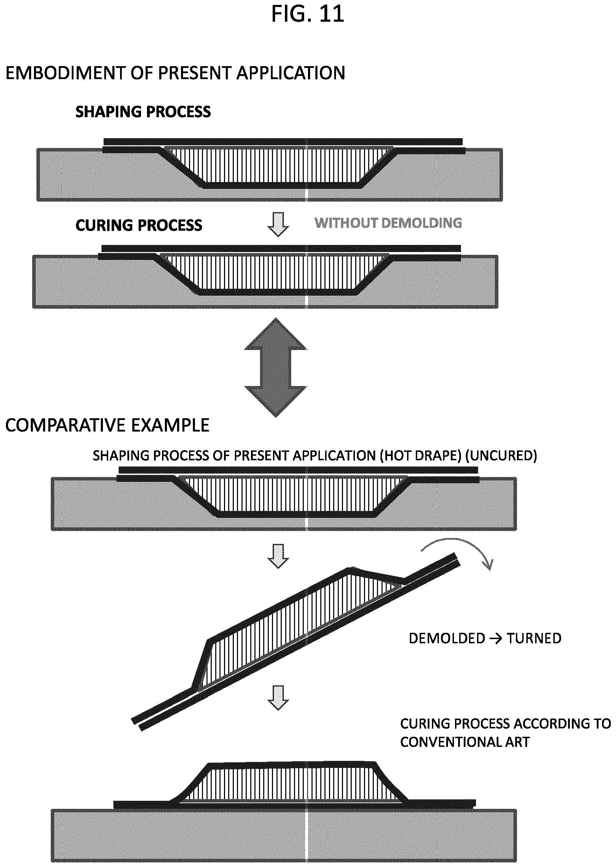

FIG. 11 illustrates an effect produced by the smooth advancing of the process from the shaping process to the curing process in the present Embodiment.

Comparative Example employs the following process. That is, the uncured honeycomb sandwich composite material shaped by the shaping process of the present Embodiment is demolded, turned upside down, and subjected to the curing process of Conventional Example.

In Comparative Example, because the honeycomb sandwich composite material is demolded and turned upside down while it is still uncured, a large deformation of the honeycomb sandwich composite material may occur. In other words, the dimensional accuracy cannot be secured.

To the contrary, if it is possible that the honeycomb sandwich composite material can be delivered before demolded from the shaping process of the present Embodiment to the curing process of the present Embodiment, the deformation caused by demolding shall not occur. In other words, the demolding and the turning are performed after completion of curing (S25) (S26). As a result, dimensional accuracy of high quality can be secured.

By the way, if the honeycomb sandwich composite 30 is delivered before demolded from the shaping process of the present Embodiment to the curing process of the present Embodiment, lack of pressure occurs during the curing process, which may invite occurrence of gaps inside the honeycomb sandwich composite 30.

To the contrary, in the present Embodiment, the internal dimension of the concave 11 of the jig 10 is not greater than the sum of the external dimension of the honeycomb core 20 and the thickness of the first prepreg sheet 21. Adjustment of the dimension enables compensation of the lack of pressure, resulting in achieving suppression of occurrence of gaps.

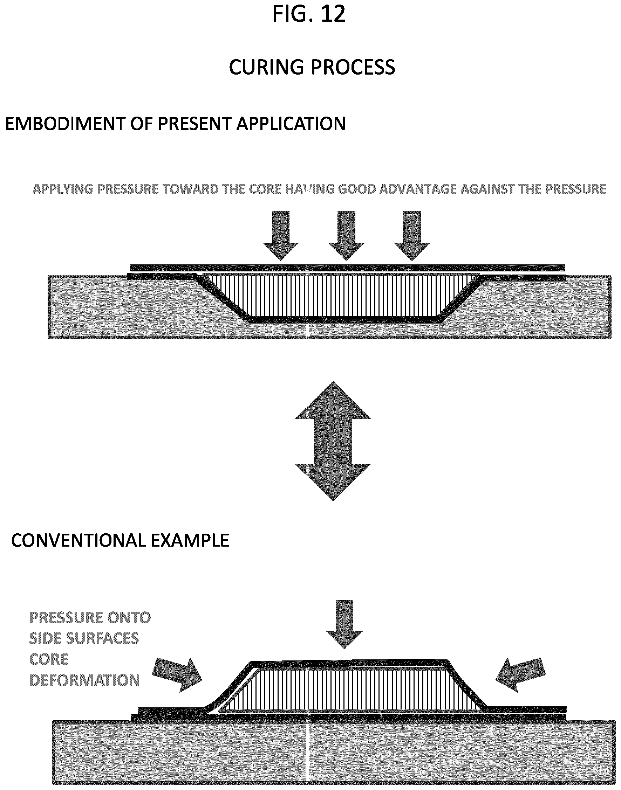

FIG. 12 illustrates an effect produced by the curing process according to the present Embodiment.

The honeycomb core has a good advantage against a force applied from a vertical direction but has a poor advantage against a force applied from a horizontal direction. In Conventional Example, a high pressure applied in the curing process may invite a large deformation of the side surfaces, i.e., may invite a damage thereof. Measurement for this was required.

To the contrary, in the curing process of the present Embodiment, because the pressure is applied only from the above (i.e., No pressure is applied to the side surfaces.), the deformation and the damage caused by the high pressure applied in the curing process can be suppressed (S23).

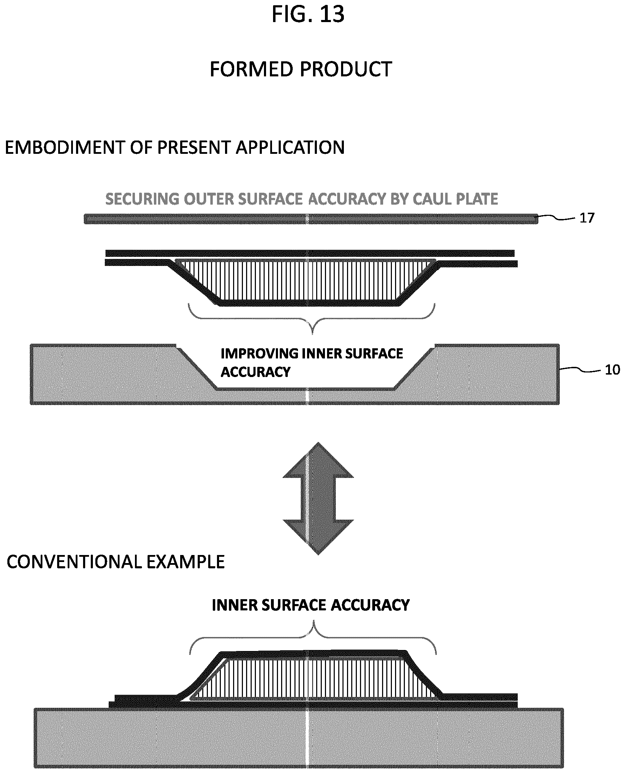

FIG. 13 illustrates another effect produced by the curing process according to the present Embodiment.

In Conventional Example, because the inside of the honeycomb sandwich composite received the pressure, the inside surface accuracy was poor. This invited a poor mounting accuracy when various kinds of parts were mounted to the inside surface of the honeycomb sandwich composite.

To the contrary, in the curing process (and the shaping process) of the present Embodiment, the inside surface of the honeycomb sandwich composite 30 is defined by the shape of the concave of the jig. This improves the inner surface accuracy. As a result, the mounting accuracy when mounting various kinds of parts onto the inside surface of the honeycomb sandwich composite 30 improves.

On the other hand, in the present Embodiment, the outside of the honeycomb sandwich composite 30 is applied with pressure (S23). To solve the problem, in the present Embodiment, the caul plate 17 is employed to define the outer shape of the honeycomb sandwich composite 30. With the structure, the outer surface accuracy is secured.

The above described effects are summarized below. In the present Embodiment, the honeycomb sandwich component material can be formed in a simple manner. More specifically, compared with Conventional Examples, labor, time, and cost can be saved. A manual operation by an operator can be eliminated.

Further, compared with Conventional Examples, the forming accuracy improves, and variation of product quality can be controlled as well. Still further, the series of processes can be automatized, and automatization produces more improved effects.

### ~Modification Example~

The invention of the present application is not limited to the above described Embodiments but various changes and modifications can be provided without departing from the scope of the present application, that is defined by the claims.

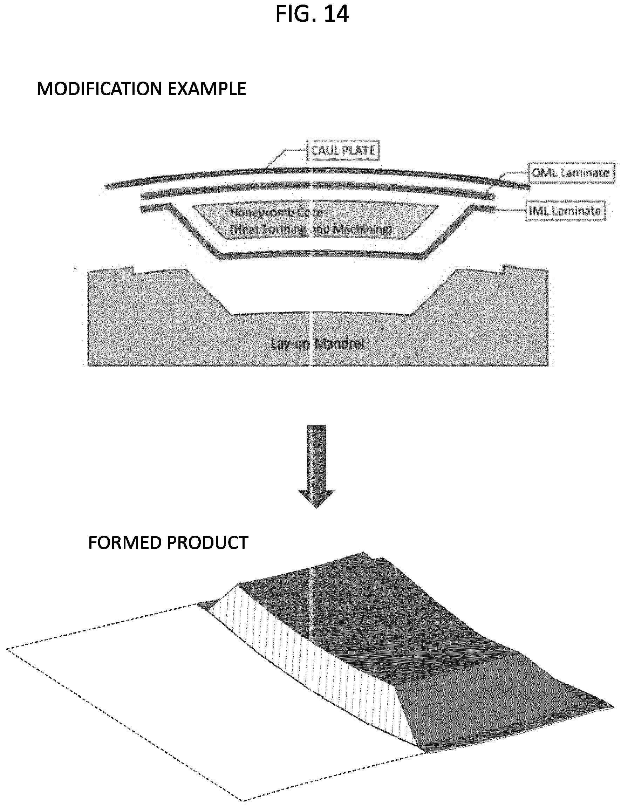

FIG. 14 illustrates a forming method according to Modification Example and a product formed thereby (perspective view of a part of cross section thereof).

In the above described Embodiment, the upper and the lower surfaces of the honeycomb sandwich composite 30 extend almost horizontally. Correspondingly, the jig 10, the concave 11, the caul plate 17, and the honeycomb core 20 also have almost horizontally extending surfaces (see, FIG. 2).

To the contrary, in Modification Example, the honeycomb sandwich composite 30 has a curved surface on its lower surface side, the curved surface slightly swelling outwardly. Correspondingly, the jig, the concave, the caul plate, and the honeycomb core also have curved surfaces. Modification Example and the invention according to the present application have the same structure other than the above described shapes, and thus Modification Example can produce the same effects as those of the invention of the present application.

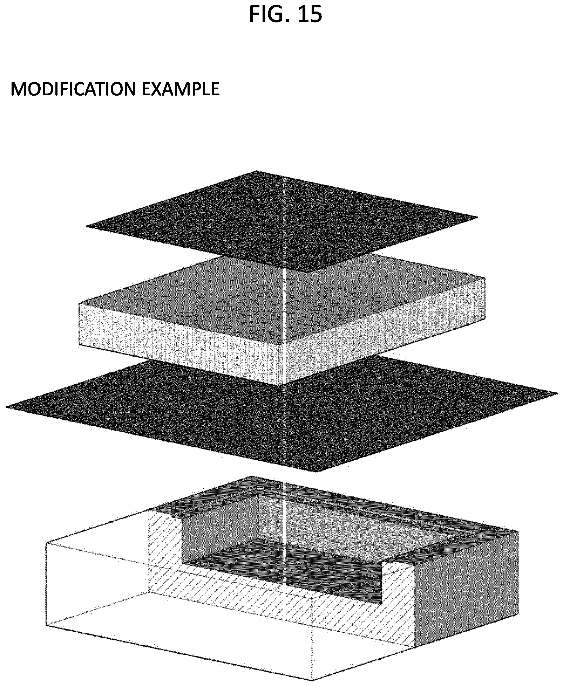

FIG. 15 illustrates a forming method according to another Modification Example.

The honeycomb core has a good advantage against a force applied from a vertical direction but has a poor advantage against a force applied from a horizontal direction. Therefore, generally, side surfaces of the honeycomb core are sloped so as not to directly receive a force from a horizontal direction. Also, in the above described Embodiment, the description is made provided that the honeycomb core has sloped side surfaces.

As described in the effects of the present Embodiments, in the curing process of the above described Embodiments, pressure is not applied onto the side surfaces. Therefore, the curing process of the above described Embodiments can be applied to the honeycomb core without the sloped side surfaces of, for example, Modification Example. The concave of the jig has a shape conforming to the shape of the honeycomb core and thus does not have the sloped side surfaces.

### [REFERENCE CHARACTER LIST]

- 1: cutting apparatus
- 2: peeling apparatus
- 3: lamination apparatus
- 4: hot drape apparatus
- 5: autoclave apparatus
- 10: jig
- 11: concave
- 11: concave
- 16: backpack
- 17: caul plate
- 20: honeycomb core
- 21: first prepreg sheet-laminated body
- 22: second prepreg sheet-laminated body
- 30: honeycomb sandwich composite

## Claims

1. A method for forming a honeycomb sandwich composite material (30) comprising a shaping process, the honeycomb sandwich composite material (30) comprising a honeycomb core having sloped side surfaces (20), a fiber-reinforced plastic-made lower part provided on a honeycomb core lower surface, and a fiber-reinforced plastic-made upper part provided on a honeycomb core upper surface which is smaller than the honeycomb core lower surface, the shaping process comprising:
a step of disposing a jig (10) formed with a concave (11) having a shape conforming to the shape of the honeycomb core (20) when it is turned upside down;
a step of placing a first prepreg sheet-laminated body (21) serving as the fiber-reinforced plastic-made upper part on the jig (10) in such a manner that the first prepreg sheet-laminated body (21) corresponds to the concave (11);
a step of disposing a hot drape apparatus (4) on the jig (10) on which the first prepreg sheet (21) is placed;
a step of shaping the first prepreg sheet-laminated body (21) into a shape conforming to the shape of the concave (11) by the hot drape apparatus (4);
a step of removing the hot drape apparatus (4);
a step of disposing the honeycomb core (20) in a state of being turned upside down into the concave of the first prepreg sheet-laminated body (21) that is shaped into a shape conforming to the shape of the concave (11), wherein an outer edge of the first prepreg sheet-laminated body (21) encloses the honeycomb core (20) in planar view; and
a step of placing a second prepreg sheet-laminated body (22) serving as the fiber-reinforced plastic-made lower part onto the first prepreg sheet-laminated body (21) with the honeycomb core (20) disposed therein.

2. The method according to claim 1, wherein the step of shaping the first prepreg sheet-laminated body (21) into a shape conforming to the shape of the concave (11) by the hot drape apparatus (4) comprises applying a heating/decompressing profile wherein heating is performed while vacuuming and, while the vacuuming is continued, the heating is taken over by cooling.

3. The method according to any of the preceding claims, wherein the step of shaping the first prepreg sheet-laminated body (21) into a shape conforming to the shape of the concave (11) by the hot drape apparatus (4) includes stretching the first prepreg sheet-laminated body (21) around shoulder parts of the honeycomb core (20).

4. The method according to any of the preceding claims, further comprising a curing process performed after the shaping process, the curing process comprising:
a step of conveying an uncured honeycomb sandwich composite material (30) before demolded to an autoclave apparatus (5) together with the jig (10);
a step of causing the autoclave apparatus (5) to apply high temperature and high pressure for curing; and
a step of causing the honeycomb sandwich composite material (30) to be demolded from the jig (10) after curing and causing the honeycomb sandwich composite material (30) to turn upside down.

5. The method according to Claim 4, wherein, in the curing process performed by the autoclave apparatus (5), a caul plate (17) is disposed in such a manner that the caul plate (17) corresponds to the lower surface of the fiber-reinforced plastic-made lower part.

## Patentansprüche

1. Verfahren zum Bilden eines Waben-Sandwich-Verbundwerkstoffs (30), das einen Formgebungsprozess umfasst, wobei der Waben-Sandwich-Verbundwerkstoff (30) einen Wabenkern mit geneigten Seitenflächen (20), einen aus faserverstärktem Kunststoff hergestellten Unterteil, der auf einer unteren Wabenkernfläche vorgesehen ist, und einen aus faserverstärktem Kunststoff hergestellten Oberteil aufweist, der auf einer oberen Wabenkernfläche vorgesehen ist, die kleiner ist als die untere Wabenkernfläche, wobei der Formgebungsprozess aufweist:
einen Schritt des Anordnens einer Vorrichtung (10), die mit einem konkaven Teil (11) ausgebildet ist, der eine Form aufweist, die der Form des Wabenkerns (20) entspricht,
wenn sie umgedreht wird;
einen Schritt des Anordnens eines ersten schichtlaminierten Prepreg-Körpers (21), der als das aus faserverstärktem Kunststoff hergestellte Oberteil dient, auf der Vorrichtung (10) in einer solchen Weise, dass der erste schichtlaminierte Prepreg-Körper (21) dem konkaven Teil (11) entspricht;
einen Schritt des Anordnens einer Hot-Drape-Vorrichtung (4) auf der Vorrichtung (10), auf der die erste Prepreg-Folie (21) platziert ist;
einen Schritt des Formens des ersten schichtlaminierten Prepreg-Körpers (21) in eine Form, die der Form des konkaven Teils (11) entspricht, durch die Hot-Drape-Vorrichtung (4);
einen Schritt des Entfernens der Hot-Drape-Vorrichtung (4);
einen Schritt des Anordnens des Wabenkerns (20) in einem umgekehrten Zustand in dem konkaven Teil des ersten schichtlaminierten Prepreg-Körpers (21), der in eine Form geformt ist, die der Form des konkaven Teils (11) entspricht, wobei ein äußerer Rand des ersten schichtlaminierten Prepreg-Körpers (21) den Wabenkern (20) in planarer Ansicht umschließt; und
einen Schritt des Platzierens eines zweiten schichtlaminierten Prepreg-Körpers (22), der als das aus faserverstärktem Kunststoff hergestellte Unterteil dient, auf den ersten schichtlaminierten Prepreg-Körper (21), wobei der Wabenkern (20) darin angeordnet ist.

2. Verfahren nach Anspruch 1, wobei der Schritt des Formens des ersten schichtlaminierten Prepreg-Körpers (21) in eine Form, die der Form des konkaven Teils (11) entspricht, durch die Hot-Drape-Vorrichtung (4) das Anwenden eines Erwärmungs-/Dekompressionsprofils umfasst, wobei die Erwärmung unter Vakuum durchgeführt wird und, während das Vakuum fortgesetzt wird, die Erwärmung durch Kühlen übernommen wird.

3. Verfahren nach einem der vorhergehenden Ansprüche, wobei der Schritt des Formens des ersten schichtlaminierten Prepreg-Körpers (21) in eine Form, die der Form des konkaven Teils (11) entspricht, durch die Hot-Drape-Vorrichtung (4) das Dehnen des ersten schichtlaminierten Prepreg-Körpers (21) um Schulterteile des Wabenkerns (20) umfasst.

4. Verfahren nach einem der vorhergehenden Ansprüche, das ferner einen Aushärtungsprozess aufweist, der nach dem Formgebungsprozess durchgeführt wird, wobei der Aushärtungsprozess aufweist:
einen Schritt des Förderns eines ungehärteten Waben-Sandwich-Verbundwerkstoffs (30), bevor er entformt wird, zu einer Autoklavenvorrichtung (5) zusammen mit der Vorrichtung (10);
einen Schritt des Bewirkens, dass die Autoklavenvorrichtung (5) eine hohe Temperatur und einen hohen Druck zum Aushärten anwendet; und
einen Schritt des Bewirkens, dass der Waben-Sandwich-Verbundwerkstoff (30) nach dem Aushärten aus der Vorrichtung (10) entformt wird, und des Bewirkens, dass der Waben-Sandwich-Verbundwerkstoff (30) umgedreht wird.

5. Verfahren nach Anspruch 4, wobei bei dem von der Autoklavenvorrichtung (5) durchgeführten Aushärtungsprozess eine Caul plate (17) so angeordnet wird, dass die Caul plate (17) der unteren Oberfläche des aus faserverstärktem Kunststoff hergestellten Unterteils entspricht.

## Revendications

1. Procédé de formation d'un matériau composite en sandwich en nid d'abeilles (30) comprenant un processus de formage, le matériau composite en sandwich en nid d'abeilles (30) comprenant un noyau en nid d'abeilles ayant des surfaces latérales inclinées (20), une partie inférieure en plastique renforcé en fibres prévue sur une surface inférieure de noyau en nid d'abeilles, et une partie supérieure en plastique renforcé en fibres prévue sur une surface supérieure de noyau en nid d'abeilles qui est inférieure à la surface inférieure de noyau en nid d'abeilles, le processus de formage comprenant :
une étape de disposition d'un gabarit (10) formé avec une concavité (11) ayant une forme se conformant à la forme du noyau en nid d'abeilles (20), lorsqu'il est tourné à l'envers ;
une étape de mise en place d'un premier corps stratifié en feuille préimprégnée (21) servant de partie supérieure en plastique renforcé en fibres sur le gabarit (10) de sorte que le premier corps stratifié en feuille préimprégnée (21) correspond à la concavité (11) ;
une étape de disposition d'un appareil de drapage à chaud (4) sur le gabarit (10) sur lequel la première feuille préimprégnée (21) est placée ;
une étape de formage du premier corps stratifié en feuille préimprégnée (21) en une forme se conformant à la forme de la concavité (11) par l'appareil de drapage à chaud (4) ;
une étape de retrait d'appareil de drapage à chaud (4) ;
une étape de disposition du noyau en nid d'abeilles (20) dans un état dans lequel il est tourné à l'envers dans la concavité du premier corps stratifié en feuille préimprégnée (21) qui est formé en une forme se conformant à la forme de la concavité (11), dans lequel un bord externe du premier corps stratifié en feuille préimprégnée (21) entoure le noyau en nid d'abeilles (20) sur une vue en plan ; et
une étape de mise en place du deuxième corps stratifié en feuille préimprégnée (22) servant de partie inférieure en plastique renforcé en fibres sur le premier corps stratifié en feuille préimprégnée (21) avec le noyau en nid d'abeilles (20) disposé dans ce dernier.

2. Procédé selon la revendication 1, dans lequel l'étape de formage du premier corps stratifié en feuille préimprégnée (21) en une forme se conformant à la forme de la concavité (11) par l'appareil de drapage à chaud (4) comprend l'application d'un profil de chauffage/décompression, dans lequel le chauffage est réalisé tout en étant sous vide et alors que la mise sous vide continue, le chauffage est relayé par le refroidissement.

3. Procédé selon l'une quelconque des revendications précédentes, dans lequel l'étape de formage du premier corps stratifié en feuille préimprégnée (21) en une forme se conformant à la forme de la concavité (11) par l'appareil de drapage à chaud (4) comprend l'étirement du premier corps stratifié en feuille préimprégnée (21) autour des parties d'épaulement du noyau en nid d'abeilles (20).

4. Procédé selon l'une quelconque des revendications précédentes, comprenant en outre un processus de durcissement réalisé après le processus de formage, le processus de durcissement comprenant :
une étape de transport d'un matériau composite en sandwich en nid d'abeilles (30) non durci avant le démoulage dans un autoclave (5) conjointement avec le gabarit (10) ;
une étape comprenant le fait d'amener l'autoclave (5) à appliquer une température élevée et une haute pression pour le durcissement ; et
une étape comprenant le fait d'amener le matériau composite en sandwich en nid d'abeilles (30) à être démoulé du gabarit (10) après durcissement et le fait d'amener le matériau composite en sandwich en nid d'abeilles (30) à se tourner à l'envers.

5. Procédé selon la revendication 4, dans lequel, lors du processus de durcissement réalisé par l'autoclave (5), une plaque de conformation (17) est disposée de sorte que la plaque de conformation (17) correspond à la surface inférieure de la partie inférieure en plastique renforcé en fibres.
